(19) Europäisches Patentamt
European Patent Office
Office européen des brevets

(11) **EP 2 049 445 B1**

(12) **FASCICULE DE BREVET EUROPEEN**

(45) Date de publication et mention de la délivrance du brevet:
**10.10.2018 Bulletin 2018/41**

(51) Int Cl.:
*C02F 11/14* (2006.01)   *C02F 1/52* (2006.01)
*C02F 1/66* (2006.01)   *C02F 11/18* (2006.01)
*C02F 1/04* (2006.01)

(21) Numéro de dépôt: **07823399.6**

(22) Date de dépôt: **06.08.2007**

(86) Numéro de dépôt international:
**PCT/FR2007/001347**

(87) Numéro de publication internationale:
**WO 2008/023106 (28.02.2008 Gazette 2008/09)**

(54) **PROCEDE ET INSTALLATION DE CONDITIONNEMENT DE BOUES AVANT SECHAGE**

VERFAHREN UND ANLAGE ZUR SCHLAMMVERPACKUNG VOR DER TROCKNUNG

METHOD AND INSTALLATION FOR PACKAGING MUDS BEFORE DRYING

(84) Etats contractants désignés:
**ES GB IT PL PT**

(30) Priorité:  **08.08.2006  FR 0607221**

(43) Date de publication de la demande:
**22.04.2009  Bulletin 2009/17**

(73) Titulaire: **DEGREMONT**
**92500 Rueil-Malmaison (FR)**

(72) Inventeurs:
• **PREVOT, Claude**
  **F-78140 Velizy (FR)**

• **LESOILLE, Marcel**
  **F-78380 Bougival (FR)**
• **HAUBRY, André**
  **F-78250 Mezy Sur Seine (FR)**

(74) Mandataire: **IPAZ**
**16, rue Gaillon**
**75002 Paris (FR)**

(56) Documents cités:
**EP-B1- 0 950 030**

**Description**

L'invention est relative à un procédé de conditionnement de boues liquides provenant d'un traitement d'eaux usées urbaines et/ou industrielles selon lequel on fait subir aux boues une étape de déshydratation mécanique suivie d'une étape de séchage thermique.

La chaîne de traitement de boues provenant de l'épuration d'eaux usées urbaines et/ou industrielles a évolué dans le temps.

Il y a plus d'une dizaine d'années maintenant, le traitement des boues s'arrêtait après une déshydratation mécanique conduisant à un degré de siccité d'environ 20 %. Les boues ainsi épaissies pouvaient être utilisées dans l'agriculture ou être déversées en décharge.

L'utilisation du chlorure ferrique comme agent coagulant est largement mise en oeuvre dans les boues liquides avant déshydratation mécanique.

De même est également connu et largement utilisé le post chaulage des boues déshydratées dans le but de les stabiliser et de les structurer pour soit une mise en décharge soit une valorisation agricole.

Ces dernières années, la destination finale des boues issues des stations d'épuration d'eaux urbaines et/ou industrielles a connu des évolutions significatives. La mise en décharge des boues n'est plus une voie privilégiée car les décharges ne pourront recevoir à terme que des déchets dits ultimes (directive européenne 1999/31/EC du 26 avril 1999). La valorisation en agriculture de boues liquides ou déshydratées doit faire face à une normalisation plus contraignante à cause des risques de pollution liés à la présence de métaux lourds et/ou de molécules organiques susceptibles de provoquer des nuisances sanitaires. Le développement de l'incinération directe n'a ni compensé l'augmentation de la production de boue, ni les contraintes de mise en décharge et de valorisation agricole.

Pour ces raisons, les technologies de séchage thermique appliquées aux boues déshydratées ont connu une industrialisation importante et un grand nombre d'unités de séchage ont été implantées soit directement sur les stations d'épuration, soit dans des centres de collecte et de traitement dédiés.

La chaîne de traitement des boues complétée par un séchage thermique permet de provoquer l'évaporation de l'eau dans des sécheurs et d'obtenir un degré de siccité élevé, de préférence supérieur à 90 %.

Le séchage thermique permet la limitation des volumes et la production d'une boue séchée plus appropriée à une valorisation énergétique (plus grande valeur calorifique) et à une valorisation agricole (hygiénisation totale du produit).

Le séchage thermique entraîne une consommation d'énergie, mais des avantages sensibles en résultent. Les boues après séchage se présentent sous forme de granules, en volume réduit. Les germes pathogènes ont été tués. Les boues ainsi traitées peuvent être homologuées en tant que produits, particulièrement intéressants pour l'agriculture.

Dans une telle chaîne de traitement comprenant une étape de séchage après l'étape de déshydratation, la stabilisation et la structuration des boues résultent du séchage lui-même de sorte qu'il n'y a plus aucune raison d'utiliser de la chaux comme c'était le cas lorsque le traitement s'arrêtait à la déshydratation et n'était pas suivi de séchage.

De nombreux retours d'expérience en provenance des unités de séchage thermique mettent toutefois en évidence des difficultés de diverses natures mais tout particulièrement la capacité variable de l'eau à s'évaporer suivant la conception de la ligne de traitement de l'eau, ainsi que des problèmes de viscosité élevée après déshydratation.

La capacité évaporatoire d'un sécheur est la quantité d'eau qu'il peut évaporer à l'heure; elle dépend de la puissance installée et des caractéristiques du sécheur. Pour les sécheurs indirects (le fluide thermique n'est pas en contact direct avec la boue), on a l'habitude d'exprimer cette capacité évaporatoire en kg d'eau évaporée par heure et par m2 de surface de séchage; elle est d'environ 20 Kg/m2.h pour une boue facile à sécher (exemple : boue organique d'aération prolongée), elle n'est plus que de 15 Kg/m2.h pour des boues plus difficiles (exemple: boues primaires), voire 13 Kg/m2.h pour des boues collantes issues de mélanges d'effluents urbains et industriels. La baisse de la capacité évaporatoire a bien sûr un impact sur le rendement thermique du sécheur et sur la consommation d'énergie qui est de l'ordre de 1kWh pour évaporer un kg d'eau dans des conditions normales.

Par exemple, il a été mis en évidence qu'une boue exclusivement biologique produite par aération prolongée se comportait différemment d'une boue activée forte charge et que cette boue activée forte charge en fonction de son âge avait, elle aussi, des propriétés variables.

Cette capacité évaporatoire est directement reliée aux caractéristiques du sécheur, et à la consommation énergétique nécessaire à mettre en oeuvre pour compenser l'endothermicité des réactions d'évaporation. Hormis les applications sur boues digérées avec réutilisation du biogaz produit, l'endothermicité des réactions est couverte par l'utilisation d'un combustible noble posant le problème général du développement durable.

Plus particulièrement, lorsque les effluents urbains sont mélangés avec une proportion significative d'effluents industriels, il a été mis en évidence une altération importante de la capacité évaporatoire des boues générées par le traitement des ces effluents.

Cette altération est plus ou moins marquée suivant la présence de certaines molécules organiques ou minérales complexes provenant de l'effluent industriel. Ces molécules couvrent un spectre très large allant des structures carbonées aliphatiques jusqu'aux dérivés aromatiques de la famille du benzène et des polyphénols en passant par tous les dérivés des acides carboxyliques. La présence de charges minérales dans les effluents industriels peut également influer fortement sur la distribution eau libre/eau liée d'une boue.

Cette altération de la capacité évaporatoire, outre qu'elle induit une consommation plus importante d'énergie noble et un temps de séchage plus long, a des conséquences sur le comportement mécanique du processus de séchage.

Par ailleurs, il est connu qu'une boue organique séchée thermiquement dans une gamme de siccité permettant de passer de 20 % à 90% passe par des étapes de rhéologie différentes dont notamment une phase dite plastique caractérisée par des propriétés colmatantes et des résistances au cisaillement élevées. Généralement la phase plastique apparaît lorsque la siccité est comprise entre 45 et 55%.

Les technologies de séchage appliquées industriellement mettent en oeuvre soit un séchage appliqué directement sur la boue déshydratée, auquel cas le sécheur doit résister mécaniquement à l'apparition de la phase plastique, soit un séchage appliqué sur une boue reconstituée. Cette boue reconstituée est un mélange de boues déshydratées et de boues séchées permettant à la boue reconstituée d'avoir une siccité au-delà de la rhéologie plastique. Dans ce cas, ce sont les équipements en amont du sécheur qui doivent assurer le conditionnement correct de la boue reconstituée et assurer ainsi un fonctionnement optimal du sécheur.

Pour ces diverses raisons, les unités de séchage traitant notamment des mélanges de boues urbaines et industrielles présentent des difficultés d'exploitation entraînant des surconsommations d'énergie noble, un taux de fiabilité plus faible à cause des problèmes mécaniques rencontrés et en

conséquence des coûts opératoires pouvant poser le problème du bien fondé de la ligne de traitement.

L'invention a pour but, surtout, de fournir un procédé de conditionnement des boues en vue d'un séchage thermique après déshydratation mécanique, qui ne présente plus, ou à un degré moindre, les inconvénients exposés ci-dessus. On souhaite en particulier éviter une diminution de la capacité évaporatoire des boues entrant dans le sécheur et, de préférence, éviter également une augmentation de la viscosité des boues.

D'une manière surprenante, il a été trouvé que, dans une chaîne de traitement comprenant une étape de déshydratation suivie d'une étape de séchage thermique dans un sécheur, l'addition de chlorure ferrique et/ou de chaux vive ou éteinte dans les boues après déshydratation et avant séchage, produisent deux résultats inattendus, différents des résultats connus pour ces produits, à savoir :

- suppression, ou tout au moins, diminution des problèmes de collage des boues dans le sécheur, avec maintien de la viscosité des boues, sans augmentation sensible ;
- maintien, voire augmentation de la capacité évaporatoire,.

L'objet de l'invention réside donc dans l'injection de réactifs en des points situés entre la déshydratation mécanique des boues et le séchage thermique de celles-ci. Ces injections contrôlées de réactifs permettent d'inhiber toute réaction pouvant, d'une part, mener à un changement inapproprié et néfaste de la rhéologie des boues et d'autre part à diminuer la capacité d'évaporation de l'eau des boues.

Selon l'invention, un procédé de conditionnement de boues liquides provenant d'un traitement d'eaux usées urbaines et/ou industrielles selon lequel on fait subir aux boues une étape de déshydratation mécanique suivie d'une étape de séchage thermique, est caractérisé en ce que l'on injecte du chlorure ferrique et de la chaux vive ou éteinte dans la boue entre l'étape de déshydratation et l'étape de séchage et/ou à l'entrée de l'étape de séchage, de sorte que le collage des boues lors de l'étape de séchage est diminué et que la capacité évaporatoire est améliorée.

La dose injectée de chlorure ferrique est avantageusement comprise entre 1 et 10% en masse par rapport à la matière sèche de la boue. La dose optimum injectée de chlorure ferrique peut être déterminée par observation de la boue déshydratée obtenue qui ne doit pas être compacte et doit donner un résultat satisfaisant au test de collage sur "média textile filtrant" exposé à la fin de la description.

De préférence, la dose injectée de chaux vive ou éteinte est comprise entre 5 et 30% en masse par rapport à la matière sèche de la boue.

L'injection de chaux est avantageusement réalisée sous forme de poudre de manière à former un enrobage du gâteau de boue, sans mélange excessif afin d'éviter toute réaction de thixotropie. La poudre de chaux peut être injectée juste avant l'étape de séchage ou au début de l'étape de séchage.

Le procédé de conditionnement selon l'invention est également mis en oeuvre au moyen d'une installation de conditionnement de boues liquides, comprenant des moyens de déshydratation mécanique suivis d'un sécheur thermique, et caractérisée en ce qu'elle comporte, entre les moyens de déshydratation mécanique et le sécheur thermique, et/ou à l'entrée du sécheur thermique, des moyens d'injection de chlorure ferrique, et/ou des moyens d'injection de chaux vive ou éteinte sur la boue.

De préférence, les moyens d'injection de chaux vive ou éteinte sont prévus pour assurer une pulvérisation de chaux vive ou éteinte sur la boue.

L'injection de chaux est réalisée de manière à former un enrobage du gâteau de boue par de la poudre de chaux.

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qui n'est nullement limitatif. Sur ce dessin :

Fig. 1 est un schéma d'un procédé de conditionnement de boues selon l'invention et
Fig. 2 illustre schématiquement l'installation de déshydratation et de séchage.

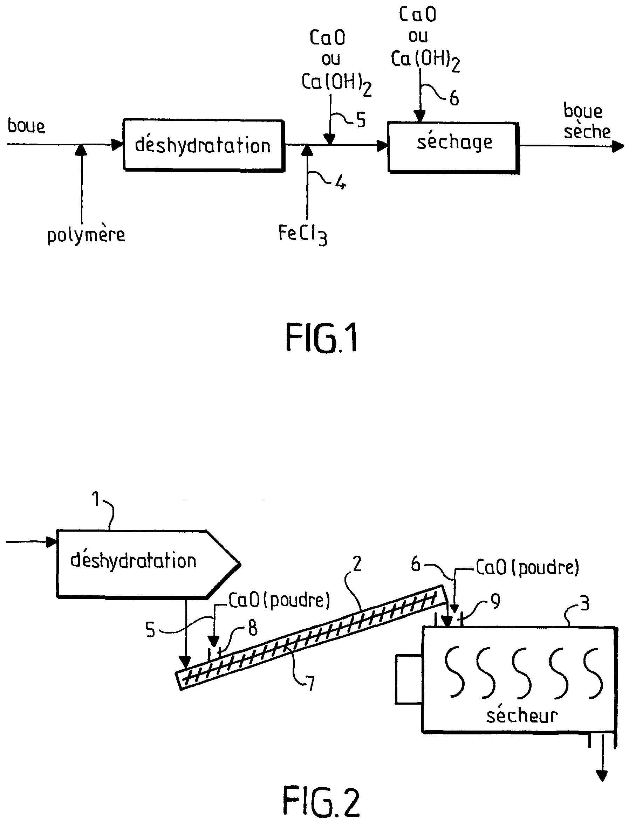

En se reportant à Fig.1 du dessin on peut voir que la boue liquide à traiter arrive, de la gauche selon le schéma, à l'étape de déshydratation mécanique. Une injection de polymère dans la boue peut être effectuée avant déshydratation.

Divers appareils tels que filtres à bandes, filtres presses centrifugeuses peuvent être utilisés pour la déshydratation mécanique. Selon la représentation de Fig.2, une centrifugeuse 1 est prévue pour cette étape.

En sortie de l'étape de déshydratation, les boues forment une sorte de pâte dont le degré de siccité peut être d'environ 20%. Les boues déshydratées sont ensuite acheminées par un dispositif transporteur 2 (Fig.2) à un sécheur 3 pour y être soumises à un séchage thermique pouvant porter le degré de siccité à 90% et plus.

Il a été constaté que sur certaines boues, notamment des boues résultant de mélanges d'eaux usées urbaines et/ou industrielles, on est confronté à une viscosité élevée des boues, conduisant à une augmentation des problèmes de collage dans le sécheur. En outre, cette augmentation de viscosité s'accompagne d'une baisse de la capacité évaporatoire.

Il en résulte qu'avec ce type de boues particulièrement difficiles à traiter, la capacité de séchage diminue, allant même parfois jusqu'à un blocage complet du sécheur.

D'une manière surprenante, il a été trouvé que l'addition de chlorure ferrique et de chaux vive ou éteinte dans les boues après déshydratation et avant séchage, et/ou à l'entrée du sécheur 3, produisent deux résultats inattendus, différents des résultats connus pour ces produits, à savoir :

- suppression, ou tout au moins, diminution des problèmes de collage des boues dans le sécheur, avec maintien de la viscosité des boues, sans augmentation sensible ;
- maintien de la capacité évaporatoire, sans baisse sensible, voire augmentation de cette capacité évaporatoire.

Selon l'invention, on injecte le chlorure ferrique (FeCl3) en solution, et la chaux vive (CaO) ou éteinte (Ca(OH)$_2$) sous forme de poudre , dans la boue après l'étape de déshydratation et avant l'étape de séchage et/ou à l'entrée de l'étape de séchage.

Une première injection d'une solution de chlorure ferrique peut s'avérer nécessaire dans certains cas dans les boues après déshydratation mécanique. Des moyens d'injection 4 du chlorure ferrique sont schématiquement représentés en Fig.1 à la sortie de l'étape de déshydratation. La dose est de 1 à 10% en masse de FeCl3 par rapport à la matière sèche contenue dans la boue. La dose optimum est déterminée par observation de la boue déshydratée obtenue. Celle ci ne doit pas être compacte et doit donner un résultat satisfaisant au test de collage sur "média textile filtrant" exposé à la fin de la description. Une injection de solution de chlorure ferrique peut également être effectuée à l'entrée du sécheur 3.

Cette étape ne correspond pas nécessairement à la recherche de la siccité optimum que l'on peut obtenir par déshydratation mécanique. Elle nécessite également l'adaptation du polymère approprié à la dose de chlorure ferrique nécessaire à l'obtention d'un test "média textile filtrant" favorable.

Une seconde injection consiste à ajouter une certaine proportion de chaux vive ou éteinte dans la boue déshydratée, juste avant l'introduction de celle-ci dans l'unité de séchage, voire même dans le sécheur proprement dit suivant la technologie de séchage utilisée. Cette introduction doit donc se faire après toute opération de stockage intermédiaire de la boue déshydratée conditionnée comme expliqué ci-dessus. Des moyens d'injection 5, 6 de la chaux sont schématiquement représentés respectivement avant l'introduction de la boue dans l'unité de séchage, et dans l'unité de séchage.

De surcroît, cette injection ne doit pas mettre oeuvre une agitation mécanique poussée afin d'éviter les phénomènes connus de liquéfaction provoqués lors de l'addition de chaux dans une boue organique.

Le mode d'injection consiste à réaliser un enrobage du gâteau de boue sans rechercher l'obtention d'un mélange intime. C'est pourquoi il est réalisé soit par l'introduction de la poudre de chaux dans un mélangeur/transporteur 2 (Fig.2), par exemple à vis 7, alimentant le sécheur, soit par addition directe dans le sécheur 3 (Fig.2) (cas par exemple des sécheurs indirects de type disques ou à pales), soit dans la trémie de gavage de la pompe d'alimentation (cas par exemple des sécheurs à couche mince), soit dans un mélangeur/transporteur assurant la production de la boue reconstituée (cas par exemple des sécheurs à tambour et des sécheurs à bandes).

La dose de chaux à injecter est fonction du type de boue à traiter, variable notamment en fonction de la quantité d'effluents industriels présente dans l'eau brute. Elle se situe dans la fourchette de 5 à 30% en masse par rapport à la matière sèche contenue dans la boue.

L'addition de chaux se fait sous forme de poudre en farinant la boue par saupoudrage entre la déshydratation et le séchage ou à l'entrée du séchage. La surface du gâteau de boue est enrobée de poudre de chaux.

On évite absolument un mélange de la chaux et de la boue qui détruirait la boue et entraînerait le phénomène de thixotropie.

L'enrobage de la boue par la poudre peut être réalisé soit au niveau de la vis 7 (Fig.2) qui amène la poudre vers le séchage, par une pluie de poudre de chaux à l'entrée 8 de cette vis, soit par une pluie de poudre de chaux à l'entrée 9 (Fig.2) du sécheur thermique. La vis 7 assure le transport de la boue sortant de l'appareil 1 de déshydratation mécanique jusqu'à l'entrée 9 du sécheur 3. A la sortie du sécheur les boues sont hygiénisées, après avoir subi un traitement thermique généralement à 105°C pendant environ 2 h ; en outre elles sont stabilisées biologiquement et ne fermentent pas.

Lors des essais pilote de mise au point du procédé, il a été constaté que le cumul des deux injections réalisées telles que décrites provoquait à la fois une augmentation importante de la capacité évaporatoire (entre 40 et 60 %) ainsi qu'une modification complète de la rhéologie de la boue inhibant complètement l'apparition de phénomènes de collage et de prise en masse.

Ces effets surprenants semblent liés à la fois à la désagrégation de la boue déshydratée due à l'utilisation du FeCl3 (diminution de la taille moyenne des particules de boue conditionnée),à la réaction exothermique à l'intérieur du sécheur provoquée par la réaction de la chaux vive avec l'eau libre à la surface de la boue en séchage et à l'élévation du pH avec la chaux vive ou éteinte.

Ensemble, ces additions de réactifs chimiques sont à la base des phénomènes ci-dessous listés :

- inhibition de la décomposition de certains composés organiques;
- modification de l'état de surface de la boue en contact avec les parois chaudes du sécheur et/ou avec l'air chaud pouvant être utilisé comme fluide caloporteur ;
- modification du pH de la boue inhibant certaines réactions chimiques ;
- utilisation des propriétés fluidifiantes des particules de chaux.

Comme déjà indiqué, la détermination de la dose optimum de chlorure ferrique est effectuée par observation de la boue déshydratée obtenue qui ne doit pas être compacte et doit donner un résultat satisfaisant au test de collage sur "média textile filtrant" exposé ci-après.

TEST DE COLLAGE SUR "MEDIA TEXTILE FILTRANT"

Cette méthodologie de laboratoire, applicable à toutes les boues, permet d'observer le décollement du gâteau de boue sur une toile : l'aspect "non compact" du gâteau et le peu d'adhérence de celui-ci sur la toile dénotent un gâteau "non collant". Un gâteau "non collant" est un des paramètres nécessaires à la caractérisation de la boue pour le bon fonctionnement de l'atelier de séchage.

**A) Principe de la mesure**

- les boues sont préalablement floculées par le ou les réactif(s) le(s) mieux approprié(s), c'est-à-dire ceux fournissant un floc granuleux très résistant, avec dégagement d'un maximum de liquide interstitiel et ce à des dosages minima ;
- les boues floculées sont ensuite drainées ;
- les boues drainées, et donc épaissies, sont compactées pour :

     a) éliminer au maximum l'air libre ;
     b) observer l'adhérence sur médium filtrant de la boue compactée (aptitude au colmatage, donc au collage) ;

- les boues ainsi compactées sont placées sur un "torchon" et enveloppées dans celui-ci pour être essorées à la main durant 5 min. Pendant l'essorage, il faut malaxer "l'enveloppe" afin d'éliminer le maximum d'eau.

**B) Appareillage**

- Pour le drainage

tamis de laboratoire de 600 $\mu$m (tamis inox Ø : 200 mm et H : 50 mm à toile métallique grillagée à maille carrée) ;
un racloir (L : 100 mm x l : 50 mm) ;

- Pour le compactage

un bêcher en plastique de 1 l ;

- Pour le "malaxage $\oplus$ essorage"

un rectangle de toile de coton (genre "essuie-mains" épais et résistant)) (L : 100 cm x l : 25 cm).

**C) Mode opératoire**

1. Echantillon à traiter

- 10 l de boues minimum
- caractériser la boue :
MES (g/l) - Extrait sec (%) - pH

Perte au feu (105-550°C) = %/MS

## 2. Test "média textile filtrant" ou Test "torchon"

- Pour chaque test, après avoir sélectionné le ou les réactifs les mieux appropriés, la prise d'échantillon de boue sera de 500 ml ;
  il faudra successivement après floculation :

  a) verser la totalité de la boue floculée au centre du tamis.
  Observer et noter la vitesse de drainage : le liquide interstitiel doit migrer rapidement dans les flocs.
  b) à l'aide du racloir métallique, faire "rouler" le tas de boue drainée sur la grille ou sur le tamis pour égoutter la boue au maximum.
  Observer l'aspect du floc : le floc doit être granuleux.
  Il faut éviter les gros flocs "gras" et les flocs trop fins.
  c) à l'aide du bêcher en plastique de 1 l, presser toute la boue drainée présente sur le tamis. Observer l'amplitude du fluage latéral de la boue : l'amplitude du fluage doit être faible et dépend de la résistance mécanique du floc à la pression. De plus, le "gâteau de boue compactée" formé doit rester sur le médium filtrant, soit sur le culot du bêcher en plastique à la fin de cette étape (le gâteau ne doit pas se dédoubler) ;
  d) à l'aide du racloir, décoller le "gâteau de boue compactée" de son support. Observer l'adhérence sur le tamis de la boue compactée (aptitude au colmatage) : le colmatage doit être faible ;
  e) verser la moitié du volume des boues compactées produites sur le "torchon";

  - plier les bords de celui-ci sur la boue, afin de réaliser une "enveloppe" étanche pour éviter de possibles fuites durant la phase de "malaxage⊕essorage" ;
  - malaxer et essorer simultanément l'"enveloppe" durant 5 min ;

  f) ouvrir l'"enveloppe" et observer le décollement du gâteau final obtenu de la toile de coton utilisée : le gâteau, d'aspect « non compact » doit se décoller sous son propre poids de la toile avec peu d'adhérence sur la toile ; par « décoller sous son propre poids » il faut comprendre que le gâteau se décolle de la toile lorsque celle-ci est disposée dans un plan vertical.
  g) faire la siccité du gâteau.

## D) Interprétation des résultats

Un gâteau "non collant" est un des paramètres nécessaires pour le bon fonctionnement de l'atelier de séchage. Ce test permet, selon l'état physique, l'aspect et le comportement sur le médium filtrant du gâteau final :

a) de prévoir le ou les réactifs ;
b) d'optimiser les doses des réactifs ;

à mettre en oeuvre dans la boue pour obtenir un gâteau "non collant".

## Revendications

1. Procédé de conditionnement de boues liquides provenant d'un traitement d'eaux usées urbaines et/ou industrielles selon lequel on fait subir aux boues une étape de déshydratation mécanique suivie d'une étape de séchage thermique dans une installation de conditionnement de boues liquides, de manière à obtenir un degré de siccité élevé, de préférence supérieur à 90 %, comprenant des moyens de déshydratation mécanique suivis d'un sécheur thermique, et des moyens (4) d'injection de chlorure ferrique et des moyens d'injection (8,9) de chaux vive ou éteinte sur la boue, entre les moyens de déshydratation mécanique (1) et le sécheur thermique (3), et/ou à l'entrée du sécheur thermique (3), **caractérisé en ce que** l'on injecte du chlorure ferrique et de la chaux vive ou éteinte sous forme de poudre sur la boue entre l'étape de déshydratation et l'étape de séchage et/ou à l'entrée de l'étape de séchage, de manière à réaliser un enrobage du gâteau de boue, sans mélange excessif afin d'éviter toute réaction de thixotropie, de sorte que le collage des boues lors de l'étape de séchage est diminué et que la capacité évaporatoire est améliorée.

2. Procédé selon la revendication 1, **caractérisé en ce que** la dose injectée de chlorure ferrique est comprise entre 1 et 10% en masse par rapport à la matière sèche de la boue.

3. Procédé selon la revendication 1 ou 2, **caractérisé en ce que** la dose optimum injectée de chlorure ferrique est déterminée par observation de la boue déshydratée obtenue qui ne doit pas être compacte et doit donner un résultat satisfaisant au test de collage sur "média textile filtrant".

4. Procédé selon l'une des revendications 1 à 3, **caractérisé en ce que** la dose injectée de chaux vive ou éteinte est comprise entre 5 et 30% en masse par rapport à la matière sèche de la boue.

5. Procédé selon la revendication 1, **caractérisé en ce que** la poudre de chaux est injectée juste avant l'étape de séchage.

**6.** Procédé selon la revendication 1, **caractérisé en ce que** la poudre de chaux est injectée au début de l'étape de séchage.


## Patentansprüche

**1.** Verfahren zum Konditionieren von flüssigen Schlämmen aus der Aufbereitung städtischer und/oder industrieller Abwässer, bei dem die Schlämme einem mechanischen Entwässerungsschritt gefolgt von einem thermischen Trocknungsschritt in einer Anlage zum Konditionieren von flüssigen Schlämmen unterzogen werden, um einen hohen Trockenheitsgrad, bevorzugterweise über 90 %, zu erhalten, umfassend Mittel zur mechanischen Entwässerung gefolgt von einem thermischen Trockner, und zwischen dem Mittel zur mechanischen Entwässerung (1) und dem thermischen Trockner (3), und/oder am Eingang des thermischen Trockners (3), Mittel (4) zum Spritzen von Eisenchlorid sowie Mittel (8,9) zum Spritzen von ÄtzKalk oder LöschKalk auf den Schlamm, **dadurch gekennzeichnet, dass** Eisenchlorid und ÄtzKalk oder LöschKalk in Form von Pulver auf den Schlamm zwischen dem Entwässerungsschritt und dem Trocknungsschritt und/oder am Eingang des Trocknungsschritts ohne übermäßiges Mischen, um jegliche Entwicklung von Thixotropie zu vermeiden, gespritzt wird, um den Schlammkuchen mit einem Überzug zu versehen, so dass das Anhaften der Schlämme während des Trocknungsschritts reduziert und die Verdampfungskapazität verbessert wird.

**2.** Verfahren gemäss Anspruch 1, **dadurch gekennzeichnet, dass** die Dosis des eingespritzten Eisenchlorids zwischen 1 und 10 Gew.-% bezogen auf die Trockensubstanz des Schlamms beträgt.

**3.** Verfahren gemäss Anspruch 1 oder 2, **dadurch gekennzeichnet, dass** die optimale Dosis des eingespritzten Eisenchlorids durch Beobachtung des erhaltenen entwässerten Schlamms bestimmt wird, der nicht kompakt sein darf und ein zufriedenstellendes Ergebnis beim Test der Haftung auf einem "textilen Filtermedium" ergeben muss.

**4.** Verfahren gemäss einem der Ansprüche 1 bis 3, **dadurch gekennzeichnet, dass** die Dosis des eingespritzten ÄtzKalk oder LöschKalkKalks zwischen 5 und 30 Gew.-% bezogen auf die Trockensubstanz des Schlamms beträgt.

**5.** Verfahren gemäss Anspruch 1, **dadurch gekennzeichnet, dass** das Kalkpulver unmittelbar vor dem Trocknungsschritt eingespritzt wird.

**6.** Verfahren gemäss Anspruch 1, **dadurch gekenn-**

zeichnet, dass das Kalkpulver zu Beginn des Trocknungsschritts eingespritzt wird.

## Claims

**1.** A method for packaging liquid sludges from an urban and / or industrial wastewater treatment in which the sludge is subjected to a mechanical dewatering step followed by a thermal drying step in a liquid sludge packaging plant, so as to obtain a high degree of dryness, preferably greater than 90%, comprising mechanical dewatering means followed by a thermal dryer, and means (4) for injecting ferric chloride and injection means (8,9) of quicklime or slaked lime on the sludge, between the mechanical dewatering means (1) and the thermal dryer (3), and / or at the inlet of the thermal dryer (3), **characterized in that** the ferric chloride and quicklime or slaked lime are injected on the sludge between the dehydration step and the drying step and / or at the entry of the drying step, so as to achieve a e coating the mud cake without excessive mixing to avoid any thixotropic reaction, so that the sludge sticking during the drying step is decreased and the evaporation capacity is improved.

**2.** Method according to claim 1, **characterized in that** the injected dose of ferric chloride is between 1 and 10% by weight relative to the dry matter of the sludge.

**3.** Method according to claim 1 or 2, **characterized in that** the optimum injected dose of ferric chloride is determined by observation of the dewatered sludge obtained which must not be compact and must give a satisfactory result of the bonding test on "textile media filtering ".

**4.** Method according to one of claims 1 to 3, **characterized in that** the injected dose of quicklime or extinguished is between 5 and 30% by weight relative to the dry matter of the sludge.

**5.** Method according to claim 1, **characterized in that** the lime powder is injected just before the drying step.

**6.** Method according to claim 1, **characterized in that** the lime powder is injected at the beginning of the drying step.

CaO
ou
Ca(OH)₂

CaO
ou
Ca(OH)₂

boue

déshydratation

séchage

boue
sèche

6

5

4

polymère

FeCl₃

# FIG.1

1

déshydratation

2

6 — CaO (poudre)

CaO (poudre)

9

3

5

8

7

sécheur

# FIG.2